# EUROPÄISCHE PATENTSCHRIFT

(11) **EP 3 717 211 B1**
(45) Veröffentlichungstag und Bekanntmachung des Hinweises auf die Patenterteilung: **25.01.2023**
(21) Anmeldenummer: 18803993.7
(22) Anmeldetag: 20.11.2018
(51) Int. Cl.: B29C 67/20, B29C 44/34, B29C 44/56, B29C 44/44, C08L 81/06, B29K 79/00, B29K 81/00

(54) **HOCHTEMPERATURSCHAUMSTOFFE MIT VERRINGERTER HARZAUFNAHME ZUR HERSTELLUNG VON SANDWICHMATERIALIEN**
HIGH TEMPERATURE FOAM MATERIALS WITH REDUCED RESIN ABSORPTION FOR THE PREPARATION OF SANDWICH MATERIALS
MOUSSES À HAUTE TEMPÉRATURE, À QUANTITÉ DE RÉSINE RÉDUITE, DESTINÉE À LA FABRICATION DE MATÉRIAUX STRATIFIÉ

(30) Priorität: 27.11.2017 EP 17203684
(43) Veröffentlichungstag der Anmeldung: 07.10.2020
(73) Patentinhaber: Evonik Operations GmbH, 45128 Essen (DE)
(72) Erfinder: TRASSL, Christian, 95485 Warmensteinach (DE); RICHTER, Thomas, 64293 Darmstadt (DE)
(74) Vertreter: Evonik Patent Association
(86) Internationale Anmeldenummer: PCT/EP2018/081839
(87) Internationale Veröffentlichungsnummer: WO 2019/101703

(56) Entgegenhaltungen:
- WO-A1-2005/105404
- DE-A1-102015 017 075
- DE-C1- 19 860 611
- US-A1- 2017 334 107

## Beschreibung

### Gebiet der Erfindung

Die vorliegende Erfindung betrifft das Gebiet der Herstellung von Hochtemperaturschäumen, wie sie im Flugzeug-, Schiffs-, Schienenfahrzeugs- und Fahrzeugbau, insbesondere durch Verbindung mit zwei Deckschichten weiterverarbeitet zu Sandwichmaterialien, Verwendung finden. Dazu wird ein neuartiges Verfahren zur Herstellung von Hochtemperaturschaumstoffen (HT-Schäume), die besonders geeignet zur Herstellung solcher Sandwichbauteile für den Leichtbau sind, bereitgestellt. Mit diesem Verfahren wird eine Verbesserung der Verarbeitbarkeit der erfindungsgemäß hergestellten HT-Schäume, sowie eine Gewichtsreduktion der Sandwichmaterialien erzielt. Bei den HT-Schäumen handelt es sich im Weiteren um Partikelhartschäume, welche gegenüber Blockhartschäumen deutlich günstiger herzustellen sind.

In der vorliegenden Erfindung wird insbesondere eine Reduzierung der Harzaufnahme bei Faserverbund-Prozessen durch eine prozessbedingte Optimierung der Oberflächenbeschaffenheit bewirkt.

### Stand der Technik

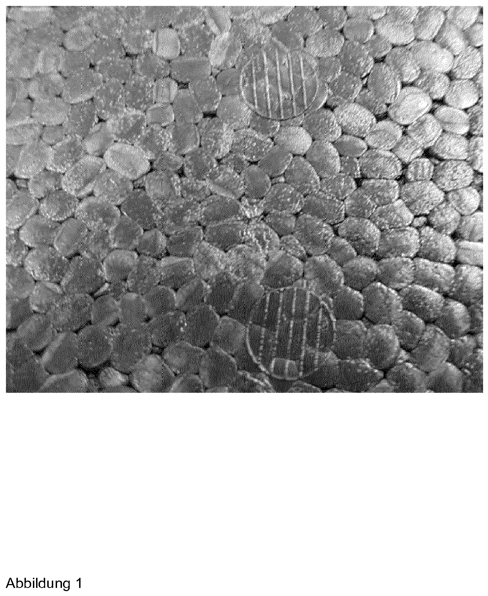

Partikelschaumstoffe bestehen aus einer Vielzahl einzelner Polymerschaumperlen, die in einem konturgebenden Werkzeug unter Energiezufuhr an den Grenzflächen versintern. Dadurch entsteht eine charakteristische Oberfläche, wie in Abb. 1 am Beispiel eines Formteils aus expandiertem Polypropylen (EPP) zu sehen ist. Deutlich erkennt man auch im Formteil noch die Grenzen der einzelnen Schaumperlen.

Zudem verbleibt prozessbedingt stets ein Teil der für den Füllvorgang verwendeten Luft in der Werkzeugkavität was zu Hohlräumen zwischen den Schaumperlen führt. Aus dem Stand der Technik in Bezug auf Partikelschaum-Werkzeuge kennt man Methoden, diese Probleme zu minimieren. So können zum Beispiel strukturierte Werkzeugoberflächen dazu führen, die Partikelgrenzen für das Auge des Betrachters verschwimmen zu lassen, indem eine übergeordnete Struktur in die Schaumstoffoberfläche geprägt wird.

Dies ist jedoch nur untergeordnet von Relevanz, wenn das Formteil als Kern für einen SandwichAufbau genutzt werden soll. Hier besteht der Wunsch nach möglichst geschlossenen Oberflächen. Das hat drei wesentliche Gründe: Zum einen muss eine Abbildung der Fehlstellen im Schaumkern auf der Oberfläche der (Faserverbund-)Deckschichten vermieden werden. Dieses Phänomen gilt als Qualitätsmangel. Weiterhin ist zur Ausnutzung des maximalen Leichtbaupotentials das Eindringen von Harz in das Kernmaterial so weit wie möglich zu vermeiden. Zuletzt besteht bei Verwendung von Prepreg-Decklagen durch das Eindringen des Harzes in die Hohlräume an der Schaumoberfläche die Gefahr von so genannten "trockenen" Stellen in der Decklage. Dabei handelt es sich insbesondere um die Stellen der Schaumkernoberfläche, in die das Harz komplett in die Zwischenräume im eingedrungen ist und damit die Konsolidierung der Fasern unzureichend ist. Dies kann zu einem mechanischen Versagen der Decklagen unter Last führen.

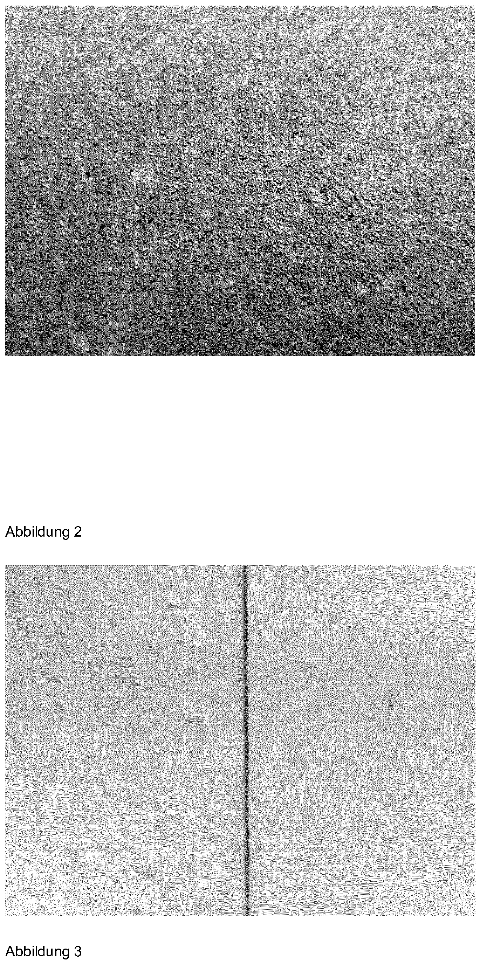

Zur Lösung dieser Probleme werden gemäß Stand der Technik zunächst rein dem Werkzeugbau entnommene Lösungen angeboten, um die Schaumstoffoberfläche beim Schäumen wunschgemäß zu modifizieren. Abb. 2 zeigt eine charakteristische Oberfläche, die mittels eines Verfahrens, bei dem die Verwendung poröser Metalleinsätze im Werkzeuginnenraum genutzt wurde, hergestellt wurden. Allerdings erkennt man bei genauer Betrachtung auch hier, dass sich Hohlräume durch diese Technologie nicht vollständig vermeiden lassen.

Um aus einem solchen Material eine komplett geschlossene Oberfläche zu realisieren, muss zusätzlich in einem dem Schritt der Schaumpartikel-Versinterung nachgeschalteten Prozess-Schritt die Werkzeugkavität so hoch erhitzt werden, dass die Formteiloberfläche des Schaumes fließfähig wird und sich dabei eine kompakte Haut auf dem Schaumstoff bildet. Diese Haut ist bei geeigneter Prozessführung komplett geschlossen und somit dicht gegenüber Flüssigkeiten.

Nach dem Stand der Technik kennt man in Bezug auf Polypropylenschaumstoff (expandiertes PP, bzw. EPP) zum Beispiel die Verwendung eines geeigneten Beschichtungsmaterials in Form eines Inliners, welcher gesondert hergestellt werden muss. Dieser Inliner wird im Laufe des Herstellungsprozesses des Schaumstoffs aufgeschmolzen. So kann der Inliner mit dem EPP-Schaum verbunden werden. Ein solches Verfahren ist beispielsweise in DE 2010 200 10 411 beschrieben. In einer Variante gemäß DE 19 640 130 kann dieser aus dem Inliner gebildete Film auch perforiert und damit dampfdurchlässig sein. In einer anderen Variante gemäß EP 11 557 99, beschränkt auf expandiertes Polystyrol (EPS) oder EPP, wird ein Bedampfungsschritt zusätzlich durchgeführt. Dabei wird die Formteiloberfläche aufgeschmolzen und eine geschlossene Oberfläche erzielt. Alles diese Verfahren bedürfen zusätzlicher Verfahrensschritte und teilweise zusätzlicher Einsatzmaterialien.

Daher besteht weiterhin das große technische Bedürfnis nach einer einfacheren alternativen Lösung der weiter oben aufgeführten technischen Herausforderungen.

Gemäß WO 2017 125412 kann zum Aufschmelzen der Schaumstoffoberfläche auch Strahlungsenergie genutzt werden. Dieses Vorgehen muss allerdings aufgrund prozess- und sicherheitsrelevanter Herausforderungen als problematisch angesehen werden.

US 2017 334107 A1 offenbart ein Verfahren zur Herstellung von Schäumen zur Weiterverarbeitung zu Sandwichmaterialien, wobei Partikel eines Polymers in einem Werkzeug unter Bildung eines Schaumformteils bei einer Versinterungstemperatur T₁ geschäumt und versintert wird und anschließend die Werkzeugkavität für 5 bis 120 sec auf eine Temperatur T₂ erhitzt wird, die mindestens 10 °C oberhalb der Versinterungstemperatur und maximal 20 °C oberhalb der Glasübergangstemperatur des Polymers liegt.

### Aufgabe

Vor dem Hintergrund des diskutierten Standes der Technik war es daher Aufgabe der vorliegenden Erfindung ein gegenüber dem Stand der Technik einfacheres und effektiveres Verfahren zur Herstellung von Sandwichmaterialien mit einem Schaumkern aus Partikelschäumen, hergestellt aus HT-Schäumen, derart zur Verfügung zu stellen, dass die Sandwichmaterialien möglichst leicht sind, sowie eine gute mechanische Stabilität und eine gute Anbindung zwischen Schaumkern und Deckschichten aufweisen.

Insbesondere war es Aufgabe, ein neues Verfahren zur Verfügung zu stellen, mittels dem einfach und mit hoher Durchsatzgeschwindigkeit HT-Schäume mit einer möglichst geschlossenen Schaumoberfläche hergestellt werden können.

Besonders bevorzugt wäre dabei, wenn das neue Verfahren zur Herstellung der HT-Schäume in Form einer Modifikation von In-Mold-Foaming-Verfahren zur Verfügung gestellt werden können. Dieses Verfahren soll dabei schnell und energiearm durchführbar sein.

Weitere, an dieser Stelle nicht explizit diskutierte Aufgaben, können sich aus dem Stand der Technik, der Beschreibung, den Ansprüchen oder den Ausführungsbeispielen ergeben.

### Lösung

Gelöst werden die Aufgaben durch ein neuartiges Verfahren zur Herstellung von Polyetherimid (PEI) HT-Schäumen und PEI-Blends, die zur Weiterverarbeitung zu Sandwichmaterialien geeignet sind. Das erfindungsgemäße Verfahren ist dabei dadurch gekennzeichnet, dass Partikel eines Hochtemperaturpolymers in einem Werkzeug unter Bildung eines HT-Schaumformteils bei einer Versinterungstemperatur T₁ geschäumt und versintert werden. Dabei umfasst der Aspekt des Schäumens nicht zwingend den gesamten Schäumungsvorgang zur Herstellung des Hochtemperaturschaums. Vielmehr können einerseits bis zu einem bestimmten Grad vorgeschäumte Partikel eingesetzt werden, die durch das Weiterschäumen schließlich im Verfahren zu einem Formteil versintern. Weiterhin, insbesondere zusätzlich und als solches besonders bevorzugt erfolgt das Schäumen bei der Versinterungstemperatur T₁ nicht vollständig, sondern wird erst im weiteren Verfahren abgeschlossen.

Das erfindungsgemäße Verfahren ist im Weiteren dadurch gekennzeichnet, dass anschließend die Werkzeugkavität, in der sich das nun gebildete Schaum-Formteil befindet, für 5 bis 120 sec, bevorzugt 15 bis 90 sec, ganz besonders bevorzugt bis 60 sec auf eine Temperatur T₂ erhitzt wird. Diese Temperatur T₂ liegt mindestens 10 °C oberhalb der Versinterungstemperatur T₁ und maximal 20 °C oberhalb der Glasübergangstemperatur des eingesetzten HT-Polymers. Die Temperatureinwirkung beim zweiten Schritt sollte dabei möglichst kurz sein, um ein Zusammenfallen des Schaumteils zu verhindern, was für den Fachmann überraschend in den angegebenen kurzen Zeiträumen realisiert werden kann.

Bevorzugt liegt die Versinterungstemperatur T₁ des HT-Polymers zwischen 140 und 220 °C, besonders bevorzugt zwischen 145 und 180 °C. Die Versinterungstemperatur liegt hierbei deutlich unterhalb der Glastemperatur des HT-Polymers, welches auch als Basispolymer bezeichnet werden kann, durch den Einfluss des enthaltenen Treibmittels und des verwendeten Dampfes, welche beide als Weichmacher dienen.

Die Glasübergangstemperatur des HT-Polymers liegt bevorzugt zwischen 210 und 235 °C, besonders bevorzugt zwischen 215 und 230 °C. Unter der Glasübergangstemperatur wird für ein nicht in einem Blend vorliegendes HT-Polymer die Glasübergangstemperatur des reinen Polymers, ohne Additive und insbesondere ohne Treibmittelbeladung verstanden. Für Blends wird eine entsprechende gemessene Glasübergangstemperatur einer Phase in der Polymermischung ohne Additive und insbesondere ohne Treibmittelbeladung verstanden.

Die Temperatur T₂ schließlich liegt bevorzugt zwischen 180 und 255 °C und besonders bevorzugt zwischen 190 und 240 °C.

Eine besonders schonende und dennoch funktionierende Variante des vorliegenden Verfahrens ist dadurch gekennzeichnet, dass die Werkzeugkavität für 15 bis 90 sec auf eine Temperatur T₂ erhitzt wird, die mindestens 15 °C oberhalb der Versinterungstemperatur und unterhalb der Glasübergangstemperatur des HT-Polymers liegt.

Das vorliegende erfindungsgemäße Verfahren führt überraschend zu einer Verringerung der Harzaufnahme bei Sandwichkernen, bestehend aus Hochtemperatur-Partikelschäumen und Composite-Deckschichten. Dieser Effekt wird überraschend dadurch realisiert, dass die Werkzeugkavität so weit erhitzt wird, dass das Polymer aufschmilzt und dabei jedoch nicht geschädigt wird. Eine nahezu vollständige Vermeidung von Hohlräumen auf der Materialoberfläche war dabei für den Fachmann als Ergebnis nicht zu erwarten.

Als Hochtemperatur-Polymere (HT-Polymere) sind insbesondere solche geeignet, die eine Glasübergangstemperatur T_{g} zwischen 210 °C und 235 °C aufweisen. Materialien mit einer tieferen Glasübergangstemperatur sind oft nicht geeignet, die gewünschten Eigenschaftsprofile eines Hochtemperaturschaums zu erfüllen. Materialien mit höheren T_{g} dagegen sind kaum verfügbar. Die Definition der Glasübergangstemperatur bezieht sich erfindungsgemäß dabei auf den relevantesten (energetisch größten) thermischen Übergang eines Materials. Dies bedeutet, dass das Material durchaus auch in dieser bevorzugten Ausführungsform einen zweiten, unterhalb von 210 °C liegenden thermischen Übergang aufweisen kann. Dies kommt beispielsweise bei phasenseperierenden Systemen, insbesondere bei Polymerblends (Polymermischungen) vor.

Für Materialien, für die keine klar offenbarte Glasübergangstemperatur bekannt ist, kann diese mittels DSC (Differential Scanning Calorimetry) bestimmt werden. Der Fachmann weiß dazu, dass die DSC nur ausreichend aussagekräftig ist, wenn nach einem ersten Aufheizzyklus bis zu einer Temperatur, die minimal 25 °C oberhalb der höchsten Glasübergangs- bzw. Schmelztemperatur, dabei jedoch mindestens 20 °C unterhalb der tiefsten Zersetzungstemperatur eines Materials liegt, die Materialprobe für mindestens 2 min bei dieser Temperatur gehalten wird. Danach wird wieder auf eine Temperatur, die mindestens 20 °C unterhalb der tiefsten zu bestimmenden Glasübergangs- oder Schmelztemperatur liegt, abgekühlt, wobei die Abkühlrate maximal 20 °C / min, bevorzugt maximal 10 °C / min betragen sollte. Nach einer weiteren Wartezeit von wenigen Minuten erfolgt dann die eigentliche Messung, bei der mit einer Aufheizrate von in der Regel 10 °C / min oder weniger die Probe bis mindestens 20 °C über die höchste Schmelz- oder Glasübergangstemperatur erhitzt wird. Die weitere Durchführung der DSC, z.B. in Bezug auf die Probenvorbereitung, kann der Fachmann gemäß DIN EN ISO 11357-1 und ISO 11357-2 durchführen. Dabei ist die DSC eine an sich sehr stabile Methode, die nur bei Abweichungen des Temperaturprogramms zu einer größeren Varianz in den Messergebnissen führen kann.

Erfindungsgemäß handelt es sich bei dem HT-Polymer um Polyetherimid (PEI). PEI hat eine Glasübergangstemperatur von ca. 217 °C. Erfindungsgemäß können auch Blends eingesetzt werden, in denen eine Komponente als solches alleine nicht erfindungsgemäß verwendbar wäre, weil zum Beispiel die Glasübergangstemperatur zu tief ist. In einer solchen Mischung wäre dann eine zweite Komponente, die auch für sich allein genommen erfindungsgemäß eingesetzt werden könnte. Dabei macht bevorzugt der Anteil des erfindungsgemäß einsetzbaren Polymers über 60 Gew%, besonders bevorzugt über 75 Gew% der Mischung der beiden Polymere aus.

Ein weiteres Beispiel für erfindungsgemäß einsetzbare Blends sind Mischungen aus PPSU und PESU. Solche Blends können mit einem Verhältnis zwischen PESU und PPSU zwischen 1 zu 9 und 9 zu 0,5, bevorzugt 1 zu 1 und 8,5 zu 1 eingesetzt werden.

Zur Durchführung des Verfahrens gibt es weitere, bevorzugt zu realisierende Aspekte. So können, um die Hochtemperaturstufe der Heizphase auf Temperatur T₂ zu realisieren, verschiedene Möglichkeiten in Betracht gezogen werden:
Zum einen kann dies durch einen zweiten Kreislauf realisiert werden, durch den das Energieträgermedium, wie Dampf oder Temperieröl, geleitet wird. Der Werkezugbau kennt hier diverse Realisierungsmöglichkeiten wie zum Beispiel den schalenartigen Aufbau der Werkzeugkavität, das Auflöten von Rohleitungen auf die dem Formteil abgewandte Werkzeugseite oder die Verwendung generativer Methoden wie zum Beispiel das selektive Lasersintern.

Weiterhin kann ein Einleger oder eine innere Schicht im Werkzeug verwendet werden, die induktiv heizbar ist. Vorteil der beiden Möglichkeiten ist, dass ein schnelles und kontrolliertes Aufheizen auf die Zieltemperatur gewährleistet wird.

Optional kann zusätzlich in beiden Varianten ein weiterer Kreislauf zum schnellen Abkühlen der Oberfläche hinzugefügt werden.

Damit sich eine homogene kompakte Deckschicht ausbilden kann, sollte die Volumenabnahme, bedingt durch den Übergang von Schaum zu kompaktem Polymer ausgeglichen werden. Zwar ist es auch möglich das Verfahren ohne einen solchen Ausgleich durchzuführen. Man kommt aber zu qualitativ höherwertigen Ergebnissen, wenn man einen Ausgleich berücksichtigt. Auch hierzu gibt es verschiedene Möglichkeiten.

Gegebenenfalls kann die Volumenabnahme durch ein Zufahren des Werkzeuges realisiert werden, wodurch das Kavitätsvolumen des Werkzuges verringert wird. Dies ist bei der Auslegung des Werkzeuges zu berücksichtigen. Der Fachmann spricht in diesem Zusammenhang von einem so genannten "atmenden Werkzeug".

Eine bessere und einfachere Alternative ist jedoch unter der Zuhilfenahme der Eigenexpansion der Schaumpartikel zu sehen. Diese Eigenexpansion erfolgt durch in den Schaumzellen enthaltenes Treibmittel. Daher ist eine Ausführung des erfindungsgemäßen Verfahrens bevorzugt, bei der die Partikel des Hochtemperaturpolymers in dem Werkzeug unter Bildung des HT-Schaumformteils bei einer Versinterungstemperatur T₁ zwischen 140 und 180 °C derart geschäumt werden, dass beim Erhitzen der Werkzeugkavität auf die Temperatur T₂ noch mindestens 5 Gew% der des ursprünglich eingesetzten Treibmittels in dem Material vorliegen.

Wie bereits zuvor ausgeführt können erfindungsgemäß in dem Verfahren auch vorgeschäumte Partikel eingesetzt werden. Daraus ergeben sich somit zwei unterschiedliche, gleichsam bevorzugte Verfahrensvarianten:
Die erste dieser Verfahrensvarianten ist dadurch gekennzeichnet, dass das Werkzeug mit nicht vorgeschäumten HT-Polymerpartikeln, die eine Partikelgröße zwischen 0,5 und 5,0 mm aufweisen, vor dem Schäumen befüllt wird.

Die zweite dieser Verfahrensvarianten ist dadurch gekennzeichnet, dass das Werkzeug mit vorgeschäumten HT-Polymerpartikeln, die eine maximale Partikelgröße zwischen 1,0 und 10 mm und eine Schüttdichte von 30 bis 200 kg/m³ aufweisen, vor dem Schäumen befüllt wird.

Bevorzugt weisen die erfindungsgemäßen Schaumstoffe einen Schäumungsgrad auf, der eine Reduktion der Dichte gegenüber dem ungeschäumten Material zwischen 1 und 98 %, bevorzugt zwischen 50 und 97 %, besonders bevorzugt zwischen 70 und 95 % ausmacht. Bevorzugt hat der Schaum eine Dichte zwischen 20 und 1000 kg/m³, bevorzugt 40 und 250 kg/m³ insbesondere bevorzugt zwischen 50 und 150 kg/m³.

Bevorzugt weist die zu schäumende Zusammensetzung des Hochtemperatur-Polymers neben dem Polymer selbst 0,5 bis 10 Gew%, bevorzugt 1 bis 9 Gew% eines Treibmittels auf. Darüber hinaus können unter anderem 0 bis 10 Gew%, bevorzugt 1 bis 5 Gew% Additive enthalten sein.

Bei den Additiven kann es sich insbesondere um Flammschutzadditive, Weichmacher, Pigmente, Antistatika, UV-Stabilisatoren, Nukleierungsmittel, Schlagzähmodifier, Haftvermittler, Rheologiemodifier, Kettenverlängerer, Fasern und/oder um Nanopartikel handeln.

Als Flammschutzadditive kommen in der Regel Phosphor-Verbindungen, insbesondere Phosphate, Phosphine oder Phosphite zum Einsatz. Geeignete UV-Stabilisatoren bzw. UV-Absorber sind dem Fachmann im Allgemeinen bekannt. In der Regel verwendet man dazu HALS-Verbindungen, Tinuvine oder Triazole. Als Schlagzähmodifier werden in der Regel Polymerpartikel, aufweisend eine Elastomer- bzw. Weichphase verwendet. Dabei handelt es sich häufig um Kern-(Schale-)Schale-Partikel, mit einer Außenschale, die als solche maximal schwach vernetzt ist und als reines Polymer eine zumindest minimale Mischbarkeit mit dem PEI aufweisen würde. Als Pigmente können grundsätzlich alle bekannten Pigmente eingesetzt werden. Insbesondere bei größeren Mengen sollte natürlich der Einfluss auf den Schäumungsvorgang - wie bei allen anderen in größeren Mengen von mehr als 0,1 Gew% eingesetzten Additiven - untersucht werden. Dies ist für den Fachmann mit relativ wenig Aufwand durchführbar.

Geeignete Weichmacher, Rheologiemodifier und Kettenverlängerer sind dem Fachmann im Allgemeinen aus der Herstellung von Folien, Membranen oder Formteilen aus HT-Polymeren oder Blends, enthaltend HT-Polymere bekannt und können entsprechend mit wenig Aufwand auf die Herstellung eines Schaums aus der erfindungsgemäßen Zusammensetzung übertragen werden.

Bei den optional zugegebenen Fasern handelt es sich in der Regel um bekannte Fasermaterialien, die einer Polymerzusammensetzung zugegeben werden können. In einer besonders geeigneten Ausführung der vorliegenden Erfindung handelt es sich bei den Fasern um PEI-, PES-, PPSU- oder um Blend-Fasern, letztere aus einer Auswahl der genannten Polymere.

Die Nanopartikel, die beispielsweise als Röhrchen, Plättchen, Stab, Kugel oder in anderen bekannten Formen vorliegen können, handelt es sich in der Regel um anorganische Materialien. Diese können gleich verschiedene Funktionen in dem fertigen Schaum übernehmen. So wirken diese Partikel teilweise als Nukleierungsmittel beim Schäumen. Weiterhin können die Partikel die mechanischen Eigenschaften, wie auch die (Gas-)Diffusionseigenschaften des Schaums beeinflussen. Weiterhin tragen die Partikel zusätzlich zur Schwerentflammbarkeit bei.

Neben den aufgeführten Nanopartikel können auch Mikropartikel oder wenig mischbare, phasenseparierende Polymere als Nukleierungsmittel zugefügt sein. Dabei sind die beschriebenen Polymere in der Betrachtung der Zusammensetzung getrennt von den anderen Nukleierungsmitteln zu sehen, da diese primär einen Einfluss auf die mechanischen Eigenschaften des Schaums, die Schmelzviskosität der Zusammensetzung und damit die Schäumungsbedingungen nehmen. Die zusätzliche Wirkung eines phasenseparierenden Polymers als Nukleierungsmittel ist ein zusätzlicher gewünschter, in diesem Fall jedoch nicht primärer Effekt dieser Komponente. Aus diesem Grund werden diese zusätzlichen Polymere in der Gesamtbilanz weiter oben getrennt von den übrigen Additiven aufgeführt.

In den Additiven können optional auch bis zu 9 Gew% einer weiteren Polymerkomponente zur Einstellung der physikalischen Eigenschaften enthalten sein. Bei den zusätzlichen Polymeren kann es sich beispielsweise um Polyamide, Polyolefine, insbesondere PP, Polyester, insbesondere PET, andere HT-Polymere, davon insbesondere schwefelbasierte Polymere, wie zum Beispiel PSU, PPSU, PESU oder Poly(meth)acrylimid handeln.

Die Wahl der Treibmittel ist relativ frei und bestimmt sich für den Fachmann insbesondere durch die gewählte Schäumungsmethode, die Löslichkeit im Polymer und die Schäumtemperatur. Geeignet sind zum Beispiel Alkohol, wie z.B. Isopranol oder Butanol, Ketone, wie Aceton oder Methylethylketon, Alkane, wie iso- oder n-Butan, bzw. -Pentan, Hexan, Heptan oder Octan, Alkene, wie zum Beispiel Penten, Hexen, Hepten oder Octen, CO₂, N₂, Wasser, Ether, wie zum Beispiel Diethylether, Aldehyde, wie z.B. Formaldehyd oder Propanal, Fluor(chlor)kohlenwasserstoffe, chemische Treibmittel oder um Mischungen aus mehreren dieser Substanzen.

Bei den chemischen Treibmitteln handelt es sich um weniger oder nicht flüchtige Substanzen, die unter den Schäumungsbedingungen chemisch zersetzt werden und dabei das eigentliche Treibmittel bilden. Ein sehr einfaches Beispiel dafür stellt tert-Butanol dar, welches unter Schäumungsbedingen Isobuten und Wasser bildet. Weitere Beispiele sind NaHCOs, Zitronensäure bzw. deren Derivate, Azodicarbonamid (ADC), bzw. Verbindungen davon ausgehend, Toluolsulfonylhydrazin (TSH), Oxybis(benzosulfohydroazid) (OBSH) oder 5-Phenyl-tetrazol (5-PT).

Bevorzugt weist der erfindungsgemäße Partikelschaum eine Zugfestigkeit nach ISO1926 größer 0,4 MPa, eine Bruchdehnung nach ISO1926 zwischen 5 und 15 %, ein Schubmodul nach ASTM C273 bei Raumtemperatur größer 6 MPa, eine Schubfestigkeit nach ASTM C273 bei Raumtemperatur größer 0,35 MPa, ein Druck-Modul nach ISO 844 bei Raumtemperatur größer 10 MPa und eine Druckfestigkeit nach ISO 844 bei Raumtemperatur größer 0,3 MPa auf. Bei Anwendung des weiter unten beschriebenen Verfahrens zur Herstellung des Partikelschaums ist es für den Fachmann, unter Erhalt der erfindungsgemäßen Glasübergangstemperatur und Zellgröße einfach, diese mechanischen Eigenschaften einzuhalten. Überraschend wurde darüber hinaus auch gefunden, dass der erfindungsgemäße Partikelschaum unter den in der Luftfahrtindustrie, insbesondere für Verwendung im Innenraum eines Luftfahrzeugs wichtigen Brandschutzbestimmungen bzw. Brandeigenschaften nach FAR 25.852 anwendbar ist.

Die erfindungsgemäß hergestellten HT-Schäume können wie beschrieben zu Schaumformteilen bzw. Schaumkern-Composite-Materialien weiterverarbeitet werden. Diese Schaumformteilen bzw. Schaumkern-Composite-Materialien können insbesondere Anwendung in der Serienfertigung z.B. für Karosseriebau oder für Innenverkleidungen in der Automobilindustrie, Interieurteile im Schienenfahrzeugs- oder Schiffsbau, in der Luft- und Raumfahrtindustrie, im Maschinenbau, bei der Herstellung von Sportgeräten, beim Möbelbau oder bei der Konstruktion von Windkraftanlagen finden.

### Ausführungsbeispiele

Die Versuche wurden mit Polymerschaumperlen auf Basis von Polysulfonen (PESU und PPSU) und auf Basis von Polyetherimid (PEI) durchgeführt. Die Verarbeitung der Schaumperlen erfolgte mit einem Formteilautomaten, Typ TVZ162/100 der Fa. Teubert Maschinenbau GmbH.

Der Partikelschaum auf Basis von PESU wurde in einem Temperaturbereich von 145 - 165 °C geschäumt und zu Formteilen versintert. Die Verhautung der Oberfläche erfolgte in einem Temperaturbereich von 185 - 235 °C.

### Abbildungsverzeichnis

Abb.1: Charakteristische Oberfläche eines Partikelschaum-Formteils gemäß Stand der Technik

Abb.2: Homogene und relativ geschlossene, jedoch teilweise offene Partikelschaumoberfläche durch Verwendung von porösen Sintermetallen im Werkzeug gemäß Stand der Technik

Abb.3: Vergleich der charakteristischen Oberflächen eines Partikelschaum-Formteils gemäß Stand der Technik und eines in einem erfindungsgemäß modifizierten, ansonsten analogen Verfahren hergestellten Partikelschaum-Formteils

## Patentansprüche

1. Verfahren zur Herstellung von Polyetherimid (PEI) HT-Schäumen und PEI-Blends zur Weiterverarbeitung zu Sandwichmaterialien, wobei Partikel eines Hochtemperaturpolymers in einem Werkzeug unter Bildung eines HT-Schaumformteils bei einer Versinterungstemperatur T₁ geschäumt und versintert wird und anschließend die Werkzeugkavität für 5 bis 120 sec auf eine Temperatur T₂ erhitzt wird, die mindestens 10 °C oberhalb der Versinterungstemperatur und maximal 20 °C oberhalb der Glasübergangstemperatur des HT-Polymers liegt.

2. Verfahren gemäß Anspruch 1, **dadurch gekennzeichnet, dass** die Versinterungstemperatur T₁ des HT-Polymers zwischen 140 und 220 °C, die Glasübergangstemperatur des HT-Polymers zwischen 210 und 235 °C und Temperatur T₂ zwischen 180 und 255 °C liegen.

3. Verfahren gemäß Anspruch 2, **dadurch gekennzeichnet, dass** die Versinterungstemperatur T₁ des HT-Polymers zwischen 145 und 180 °C, die Glasübergangstemperatur des HT-Polymers zwischen 215 und 230 °C und Temperatur T₂ zwischen 190 und 240 °C liegen.

4. Verfahren gemäß einem der Ansprüche 1 bis 3, **dadurch gekennzeichnet, dass** die Werkzeugkavität für 15 bis 90 sec auf eine Temperatur T₂ erhitzt wird.

5. Verfahren gemäß einem der Ansprüche 1 bis 4, **dadurch gekennzeichnet, dass** die Partikel des Hochtemperaturpolymers in dem Werkzeug unter Bildung des HT-Schaumformteils bei der Versinterungstemperatur T₁ zwischen 140 und 180 °C derart geschäumt werden, dass beim Erhitzen der Werkzeugkavität auf die Temperatur T₂ noch mindestens 5 Gew% der des ursprünglich eingesetzten Treibmittels in dem Material vorliegen.

6. Verfahren gemäß einem der Ansprüche 1 bis 5, **dadurch gekennzeichnet, dass** die Werkzeugkavität für 5 bis 120 sec auf eine Temperatur T₂ erhitzt wird, die mindestens 15 °C oberhalb der Versinterungstemperatur und unterhalb der Glasübergangstemperatur des HT-Polymers liegt.

7. Verfahren gemäß einem der Ansprüche 1 bis 6, **dadurch gekennzeichnet, dass** das Werkzeug mit nicht vorgeschäumten HT-Polymerpartikeln, die eine Partikelgröße zwischen 0,5 und 5,0 mm aufweisen, vor dem Schäumen befüllt wird.

8. Verfahren gemäß einem der Ansprüche 1 bis 6, **dadurch gekennzeichnet, dass** das Werkzeug mit vorgeschäumten HT-Polymerpartikeln, die eine maximale Partikelgröße zwischen 1,0 und 10 mm und eine Schüttdichte von 30 bis 200 kg/m³ aufweisen, vor dem Schäumen befüllt wird.

## Claims

1. Process for producing polyetherimide (PEI) HT foams and PEI blends for further processing into sandwich materials, wherein particles of a hightemperature polymer are foamed and sintered in a mould at a sintering temperature T₁ to form an HT foam moulding and subsequently the mould cavity is heated to a temperature T₂ at least 10°C above the sintering temperature and not more than 20°C above the glass transition temperature of the HT polymer for 5 to 120 sec.

2. Process according to Claim 1, **characterized in that** the sintering temperature T₁ of the HT polymer is between 140°C and 220°C, the glass transition temperature of the HT polymer is between 210°C and 235°C and temperature T₂ is between 180°C and 255°C.

3. Process according to Claim 2, **characterized in that** the sintering temperature T₁ of the HT polymer is between 145°C and 180°C, the glass transition temperature of the HT polymer is between 215°C and 230°C and temperature T₂ is between 190°C and 240°C.

4. Process according to any of Claims 1 to 3, **characterized in that** the mould cavity is heated to a temperature T₂ for 15 to 90 sec.

5. Process according to any of Claims 1 to 4, **characterized in that** the particles of the hightemperature polymer are foamed in the mould to form the HT foam moulding at the sintering temperature T₁ between 140°C and 180°C in such a way that upon heating of the mould cavity to the temperature T₂ at least 5% by weight of the originally employed blowing agent still remains in the material.

6. Process according to any of Claims 1 to 5, **characterized in that** the mould cavity is heated to a temperature T₂ which is at least 15°C above the sintering temperature and below the glass transition temperature of the HT polymer for 5 to 120 sec.

7. Process according to any of Claims 1 to 6, **characterized in that** prior to foaming the mould is filled with non-prefoamed HT polymer particles having a particle size between 0.5 and 5.0 mm.

8. Process according to any of Claims 1 to 6, **characterized in that** prior to foaming the mould is filled with prefoamed HT polymer particles having a maximum particle size between 1.0 and 10 mm and a bulk density of 30 to 200 kg/m³.

## Revendications

1. Procédé de préparation de mousses HT de polyétherimide (PEI) et de mélanges de PEI pour le traitement ultérieur en matériaux en sandwich, des particules d'un polymère à haute température étant moussées et frittées à une température de frittage T₁ dans un outil avec formation d'une pièce moulée de mousse HT et ensuite la cavité d'outil étant chauffée pendant 5 à 120 s à une température T₂, qui se situe au moins 10 °C au-dessus de la température de frittage et au maximum 20 °C au-dessus de la température de transition vitreuse du polymère HT.

2. Procédé selon la revendication 1, **caractérisé en ce que** la température de frittage T₁ du polymère HT se situe entre 140 et 220 °C, la température de transition vitreuse du polymère HT se situe entre 210 et 235 °C et la température T₂ se situe entre 180 et 255 °C.

3. Procédé selon la revendication 2, **caractérisé en ce que** la température de frittage T₁ du polymère HT se situe entre 145 et 180 °C, la température de transition vitreuse du polymère HT se situe entre 215 et 230 °C et la température T₂ se situe entre 190 et 240 °C.

4. Procédé selon l'une quelconque des revendications 1 à 3, **caractérisé en ce que** la cavité d'outil est chauffée pendant 15 à 90 s à une température T₂.

5. Procédé selon l'une quelconque des revendications 1 à 4, **caractérisé en ce que** les particules du polymère à haute température sont moussées à la température de frittage T₁ comprise entre 140 et 180 °C dans l'outil avec formation de la pièce moulée de mousse HT de telle manière que lors du chauffage de la cavité d'outil à la température T₂ encore au moins 5 % en poids de l'agent de gonflement utilisé à l'origine dans le matériau sont présents.

6. Procédé selon l'une quelconque des revendications 1 à 5, **caractérisé en ce que** la cavité d'outil est chauffée pendant 5 à 120 s à une température T₂, qui se situe au moins 15 °C au-dessus de la température de frittage et en dessous de la température de transition vitreuse du polymère HT.

7. Procédé selon l'une quelconque des revendications 1 à 6, **caractérisé en ce que** l'outil est rempli avant le moussage avec des particules de polymère HT non prémoussées qui présentent une taille de particule comprise entre 0,5 et 5,0 mm.

8. Procédé selon l'une quelconque des revendications 1 à 6, **caractérisé en ce que** l'outil est rempli avant le moussage avec des particules de polymère HT prémoussées qui présentent une taille maximale de particule comprise entre 1,0 et 10 mm et une densité apparente de 30 à 200 kg/m³.
